# EUROPÄISCHE PATENTSCHRIFT

(11) **EP 3 330 551 B1**
(45) Veröffentlichungstag und Bekanntmachung des Hinweises auf die Patenterteilung: **19.02.2020**
(21) Anmeldenummer: 17202266.7
(22) Anmeldetag: 17.11.2017
(51) Int. Cl.: F16B 23/00, B25B 15/00, B21K 1/46

(54) **HOCHFESTE LEICHTBAUSCHRAUBE MIT DOPPELKONTURANGRIFF**
HIGH-STRENGTH LIGHTWEIGHT SCREW HAVING A DOUBLE CONTOUR ENGAGEMENT
VIS POUR CONSTRUCTION LÉGÈRE À HAUTE RÉSISTANCE POURVU D'ENTAILLE À DOUBLE CONTOUR

(30) Priorität: 02.12.2016 DE 102016123318
(43) Veröffentlichungstag der Anmeldung: 06.06.2018
(73) Patentinhaber: KAMAX Holding GmbH & Co. KG, 35315 Homberg (Ohm) (DE)
(72) Erfinder: Rühl, Reiner, 35327 Ulrichstein (DE); Schmitt, Thorsten, 35321 Laubach (DE); Hartmann, Dr. Gunther, verstorben (DE); Kellner, Manuel, 36304 Alsfeld-Altenburg (DE); Vennemann, Klaus-Günter, 6384 Waidring/Tirol (AT)
(74) Vertreter: Müller Schupfner & Partner Patent- und Rechtsanwaltspartnerschaft mbB

(56) Entgegenhaltungen:
- US-A- 2 667 650
- US-A- 3 151 519
- US-A- 3 238 541
- US-A- 3 324 491
- US-A- 3 396 765
- US-A1- 2010 014 940

## Beschreibung

### TECHNISCHES GEBIET DER ERFINDUNG

Die Erfindung betrifft eine hochfeste Schraube mit einem Kopf mit einer Werkzeugangriff-Kontur.

Üblicherweise besitzen Schrauben entweder eine Werkzeugangriff-Außenkontur oder eine Werkzeugangriff-Innenkontur.

### STAND DER TECHNIK

Aus dem deutschen Gebrauchsmuster DE 20 2008 016 808 U1 ist eine Radschraube mit einem Kopf mit einer Werkzeugangriff-Außenkontur bekannt. Die Werkzeugangriff-Außenkontur ist als Außensechskant ausgebildet. Radial innen in dem Kopf ist eine zentrale polygonale Vertiefung vorhanden, die keine Werkzeugangriff-Kontur bildet. Das bei der Herstellung der Schraube durch Umformung aus dem Bereich der Vertiefung verdrängte Material dient zur Füllung der Ecken des Außensechskants.

Aus der deutschen Patentanmeldung DE 100 46 562 A1 ist eine Schraube mit einem Kopf mit einer Werkzeugangriff-Außenkontur und einer Werkzeugangriff-Innenkontur bekannt. Die Werkzeugangriff-Außenkontur gehört dem Geometrietyp Sechsrund an. Die Werkzeugangriff-Innenkontur gehört dem Geometrietyp Sechsrund, Sechskant oder Vielzahn an.

Aus der europäischen Patentanmeldung EP 1 987 792 A1 ist eine Schraube mit einer Werkzeugangriff-Innenkontur bekannt. Die Schraube weist in dem Bereich ihres Kopfs einen Klemmbereich auf, der durch die Anordnung mindestens eines Schlitzes radial komprimierbar ist. Die Komprimierung dient zum Einsetzen der Schraube mit ihrem Klemmbereich in eine Aufnahme.

Aus der deutschen Patentanmeldung DE 10 2007 036 529 A1 ist ein Betätigungswerkzeug zum Betätigen einer Schraube mit einer Werkzeugangriff-Innenkontur bekannt.

Aus dem US-amerikanischen Patent US 3,396,765 sind eine Schraube mit einem Kopf mit einer Werkzeugangriff-Außenkontur und einer Werkzeugangriff-Innenkontur sowie ein zugehöriges Betätigungswerkzeug bekannt. Das Betätigungswerkzeug weist ein Außenbetätigungselement zum Eingreifen in die Werkzeugangriff-Außenkontur des Kopfs der Schraube und ein Innenbetätigungselement zum gleichzeitigen Eingreifen in die Werkzeugangriff-Innenkontur des Kopfs der Schraube auf.

Aus dem US-amerikanischen Patent US 3,324,491 ist eine Schraube mit einem Kopf mit einer Werkzeugangriff-Außenkontur bekannt. In den Kopf der Schraube werden Vertiefungen eingebracht, um die vollständige Füllung der Werkzeugangriff-Außenkontur und insbesondere deren Ecken zu erreichen.

### AUFGABE DER ERFINDUNG

Der Erfindung liegt die Aufgabe zugrunde, eine hochfeste Schraube bereitzustellen, die leicht ist und sich variabel und verlässlich betätigen lässt.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine hochfeste Schraube mit einem Kopf mit einer Werkzeugangriff-Außenkontur und einer Werkzeugangriff-Innenkontur, wobei in der Werkzeugangriff-Innenkontur taschenförmige Vertiefungen angeordnet sind.

Die Erfindung betrifft auch ein Umformverfahren zum maschinellen Herstellen einer Schraube durch Umformung eines Rohlings derart, dass ein Kopf einer Schraube mit einer Werkzeugangriff-Außenkontur, einer Werkzeugangriff-Innenkontur und taschenförmigen Vertiefungen in der Werkzeugangriff-Innenkontur erzeugt wird.

Die Erfindung betrifft weiterhin ein Umformwerkzeug zum Herstellen einer hochfesten Schraube aus einem Rohling, mit einem Stempelwerkzeug und einem Matrizenwerkzeug, die so ausgebildet und angeordnet sind, dass sie bei einer Betätigung des Umformwerkzeugs den Rohling derart umformen, dass ein Kopf einer Schraube mit einer Werkzeugangriff-Außenkontur, einer Werkzeugangriff-Innenkontur und taschenförmigen Vertiefungen in der Werkzeugangriff-Innenkontur entsteht.

### Definitionen

**Hochfeste Schraube:** Unter einer hochfesten Schraube wird in dieser Anmeldung eine Schraube mit einer Zugfestigkeit Rₘ von mindestens 800 N/mm² verstanden. Typische hochfeste Schrauben gehören den Festigkeitsklassen 8.8, 10.9 oder 12.9 an. Es kann sich bei der erfindungsgemäßen hochfesten Schraube aber auch um eine ultrahochfeste Schraube mit einer Zugfestigkeit Rₘ von mindestens 1.400 N/mm² handeln. Die erfindungsmäße "hochfeste" Schraube ist also mindestens eine hochfeste Schraube, kann aber auch eine ultrahochfeste Schraube sein.

**Werkzeugangriff-Außenkontur:** Unter einer Werkzeugangriff-Außenkontur ist eine radial außen an dem Kopf der Schraube liegende Kontur zu verstehen, an der ein Betätigungswerkzeug zum Betätigen der Schraube angreift. Die Kontur wird durch mehrere Funktionsflächen gebildet, die meist über Ecken oder Radien aneinander anschließen. Im Fachgebiet der Erfindung wird eine Werkzeugangriff-Außenkontur oftmals als "Außenkraftangriff" bezeichnet.

**Werkzeugangriff-Innenkontur:** Unter einer Werkzeugangriff-Innenkontur ist eine radial innen an dem Kopf der Schraube liegende Kontur zu verstehen, in die ein Betätigungswerkzeug zum Betätigen der Schraube eingreift. Die Kontur wird durch mehrere Funktionsflächen gebildet, die meist über Ecken oder Radien aneinander anschließen. Die Werkzeugangriff-Innenkontur begrenzt eine zentrale Vertiefung in dem Kopf der Schraube in radialer Richtung. Diese zentrale Vertiefung ist von den in dieser Anmeldung genannten taschenförmigen Vertiefungen zu unterscheiden. Im Fachgebiet der Erfindung wird eine Werkzeugangriff-Innenkontur oftmals als "Innenkraftangriff" bezeichnet.

**Mehrkant:** Unter einem Mehrkant wird in dieser Anmeldung eine Ausbildung einer Werkzeugangriff-Außenkontur ("Außenmehrkant") oder einer Werkzeugangriff-Innenkontur ("Innenmehrkant") verstanden, bei der die etwa geradlinigen Funktionsflächen der Untereinheiten des Mehrkants innerhalb der Untereinheit über eine Ecke unter einem Winkel von 120° aneinander anschließen.

**Mehrzahn:** Unter einem Mehrzahn wird in dieser Anmeldung eine Ausbildung einer Werkzeugangriff-Außenkontur ("Außenmehrzahn") oder einer Werkzeugangriff-Innenkontur ("Innenmehrzahn") verstanden, bei der die etwa geradlinigen der Untereinheiten des Mehrzahns innerhalb der Untereinheit über eine Ecke unter einem Winkel von 90° aneinander anschließen.

**Mehrrund:** Unter einem Mehrrund wird in dieser Anmeldung eine Ausbildung einer Werkzeugangriff-Außenkontur ("Außenmehrrund") oder einer Werkzeugangriff-Innenkontur ("Innenmehrrund") verstanden, bei der die verrundeten Funktionsflächen über runde Ecken aneinander anschließen.

**Geometrietyp:** Unter einem Geometrietyp wird in dieser Anmeldung die zugrundeliegende geometrische Form der Werkzeugangriff-Kontur verstanden. Typische Geometrietypen sind Mehrkant, Mehrzahn und Mehrrund. Dabei wird nicht zwischen der Außenkontur und der Innenkontur unterschieden. Dies bedeutet z. B., dass ein Außenmehrkant und ein Innenmehrkant demselben ersten Geometrietyp, ein Außenmehrzahn und ein Innenmehrzahn demselben zweiten Geometrietyp und ein Außenmehrrund und ein Innenmehrrund demselben dritten Geometrietyp angehören.

### Weitere Beschreibung

Bei der neuen Schraube handelt es sich um eine Leichtbauschraube. Durch die neue Ausbildung mit einer Werkzeugangriff-Außenkontur und einer Werkzeugangriff-Innenkontur ist die Masse und somit das Gewicht des Kopfs der Schraube wesentlich reduziert. Die Gewichtsreduzierung kann dabei im Vergleich zu einem Kopf mit einer Werkzeugangriff-Außenkontur etwa 30 % betragen.

Aufgrund der Einbringung der Werkzeugangriff-Innenkontur im Rahmen der Kaltumformung ergibt sich das Problem, dass die außenliegenden Ecken der Werkzeugangriff-Außenkontur nicht vollständig mit Material gefüllt werden. Anstelle des gewünschten vergleichsweise scharfkantigen Übergangs zwischen den Kraftangriffsflächen entsteht am oberen Ende des Kopfs ein flächiges Dreieck. Hierdurch wird die Höhe der ordnungsgemäß ausgebildeten Kraftangriffsflächen zwischen den Ecken reduziert. Diese Höhe wird auch als effektive Schlüsselhöhe bezeichnet. Das gewünschte Drehmoment kann dann nicht mehr übertragen werden.

Diesem unerwünschten Effekt wirken nun die neuen taschenartigen Vertiefungen in den Kraftangriffsflächen der Werkzeugangriff-Innenkontur entgegen. Sie stellen Material bereit, welches im Rahmen der Kaltumformung beim Herstellen des Kopfs der Schraube aus diesem Bereich der Kraftangriffsflächen der Werkzeugangriff-Innenkontur verdrängt wird und stattdessen in die Ecken der Werkzeugangriff-Außenkontur fließt. Dieses Material wird an dieser Stelle der Kraftangriffsflächen der Werkzeugangriff-Innenkontur nicht benötigt und wird somit sinnvoll genutzt, um die Wirksamkeit der Werkzeugangriff-Außenkontur zur Übertragung des gewünschten Drehmoments zu verbessern. Die neuen taschenartigen Vertiefungen in den Kraftangriffsflächen der Werkzeugangriff-Innenkontur bilden ein zusätzliches Merkmal und sind somit nicht die (übliche) Werkzeugangriff-Innenkontur selbst.

Die neue hochfeste Schraube mit Doppelkonturangriff ist aber nicht nur leicht, sondern ermöglicht auch ganz neue Arten der Betätigung. Ein erster Vorteil besteht in der erhöhten Flexibilität. Die Schraube kann je nach Einbausituation und/oder vorhandenem Werkzeug mittels ihrer Werkzeugangriff-Außenkontur oder ihrer Werkzeugangriff-Innenkontur angezogen bzw. gelöst werden. Ein zweiter Vorteil besteht in der Möglichkeit der Übertragung eines größeren Drehmoments, indem die Schraube gleichzeitig mittels ihrer Werkzeugangriff-Außenkontur und ihrer Werkzeugangriff-Innenkontur betätigt wird. Ein dritter Vorteil besteht in der Möglichkeit der Dimensionierung des Kopfs der Schraube derart, dass eine Betätigung nur unter gleichzeitiger Verwendung der Werkzeugangriff-Außenkontur und der Werkzeugangriff-Innenkontur möglich ist, ohne die Werkzeugangriff-Kontur zu beschädigen. Dies stellt ein Sicherheitsmerkmal dar, um beispielsweise einen Diebstahl von Rädern von Kraftfahrzeugen durch derart ausgebildete Radschrauben zu verhindern. Eine weitere Anwendungsmöglichkeit sind z. B. derart ausgebildete Motorschrauben zum Verhindern unerwünschter Manipulationen an dem Motor eines Kraftfahrzeugs.

Die Werkzeugangriff-Innenkontur kann Kraftangriffsflächen aufweisen, die jeweils über Ecken aneinander angrenzen ("Innenecken"). Die Ecken erstrecken sich jeweils in einer Richtung, die in etwa parallel zu der Richtung der Achse der Schraube verläuft. Die taschenartigen Vertiefungen können jeweils etwa mittig zwischen den Ecken angeordnet sein. Sie können jedenfalls in der Mitte zwischen den Ecken angeordnet sein und sich ein Stück in beide Richtungen zu der nächsten linken Ecke und der nächsten rechten Ecke erstrecken. Durch die mittige Anordnung wird sichergestellt, dass das im Rahmen der Kaltumformung aus den Vertiefungen verdrängte Material die Ecken der Werkzeugangriff-Außenkontur ("Außenecken") gleichmäßig füllt. Gleichzeitig werden die erforderlichen Kraftangriffsflächen an der Werkzeugangriff-Innenkontur nicht beeinträchtigt.

Die Innenecken erstrecken sich vom Boden der zentralen Ausnehmung in dem Kopf der Schraube bis zum oberen freien Ende des Kopfs der Schraube.

Die zentrale Ausnehmung kann eine kegelstumpfförmige Gestalt aufweisen und sich nach unten in Richtung des Schafts der Schraube verjüngen. Auch hierdurch wird eine verbesserte Füllung des oberen Bereichs der Außenecken erreicht.

Neben dem Kopf weist die Schraube einen Schaft mit einem Gewindeabschnitt mit einem Gewinde auf. In axialer Richtung unmittelbar an die Kopfauflagefläche des Kopfs anschließend ist zumeist ein gewindefreier Schaftabschnitt mit einer gewissen Länge vorhanden. Dieser kann aber auch eine minimale Länge besitzen oder praktisch vollständig entfallen. Die Schraube kann auch als Bundschraube ausgebildet sein und dementsprechend einen benachbart zu dem Kopf angeordneten Bund aufweisen. Die Außenecken und die Innenecken erstrecken sich normalerweise nicht über den Bund. Dies könnte aber auch anders sein.

Die taschenartigen Vertiefungen in der Werkzeugangriff-Innenkontur können jeweils an das von dem Schaft wegweisende axiale Ende des Kopfs anschließen. In der anderen Richtung können sie sich bis zum Boden der zentralen Ausnehmung in dem Kopf der Schraube erstrecken. Hierdurch wird das für das Füllen der Außenecken erforderliche Materialvolumen bereitgestellt.

Die taschenartigen Vertiefungen in der Werkzeugangriff-Innenkontur können jeweils etwa mittig zwischen den Ecken der Werkzeugangriff-Außenkontur angeordnet sein. Die taschenartigen Vertiefungen in der Werkzeugangriff-Innenkontur können aber auch radial innenliegend zu den Ecken der Werkzeugangriff-Außenkontur angeordnet sein. Die Anordnung hängt im Wesentlichen von der jeweiligen Kombination der Werkzeugangriff-Innenkontur und der Werkzeugangriff-Außenkontur ab.

Die Anzahl und Anordnung der taschenartigen Vertiefungen kann so gewählt sein, dass jeweils eine taschenartige Vertiefung in Umfangsrichtung zwischen zwei benachbarten Ecken der Werkzeugangriff-Außenkontur angeordnet ist. Es ist aber auch möglich, dass die taschenartigen Vertiefungen nicht zwischen den Ecken, sondern radial innenliegend zu den Ecken der Werkzeugangriff-Außenkontur angeordnet sind. Sie sind dann insbesondere nicht an jeder Ecke, sondern an jeder zweiten Ecke angeordnet. Eine solche Anordnung kommt insbesondere in Frage, wenn die Anzahl der Ecken der Werkzeugangriff-Außenkontur größer ist als die Anzahl der Ecken der Werkzeugangriff-Innenkontur.

Die taschenförmigen Vertiefungen können als kaltumgeformte Dellen in der jeweiligen Kraftangriffsfläche der Werkzeugangriff-Innenkontur ausgebildet sein. Sie weisen insbesondere unten in Richtung des Schafts der Schraube eine etwa ellipsenförmige oder parabelförmige Gestalt auf. Nach oben hin werden sie durch die obere Randfläche des Kopfs begrenzt.

Die Breite der taschenartigen Vertiefungen kann in Richtung des von dem Schaft wegweisenden axialen Endes des Kopfs zunehmen.

Die taschenartigen Vertiefungen können sich nicht über die gesamte Breite der jeweiligen Kraftangriffsfläche der Werkzeugangriff-Innenkontur erstecken. Sie enden deutlich vor der nächsten Ecke, so dass sichergestellt ist, dass die ordnungsgemäße Funktion der Kraftangriffsfläche erhalten bleibt.

Die Werkzeugangriff-Innenkontur kann dem Geometrietyp Mehrkant, Mehrzahn oder Mehrrund angehören. Bei dem Mehrkant handelt es sich insbesondere um einen genormten Innenmehrkant, so dass dieser mit üblichen Standardwerkzeugen betätigt werden kann. Es kann sich insbesondere um einen Sechskant oder Achtkant handeln. Bevorzugt ist aber eine möglichst geringe Anzahl der Kanten. Bei der vom Fachmann oftmals als "Vierkant" bezeichneten Geometrieform liegt ein Winkel von 90° zwischen den Funktionsflächen vor, so dass es sich nicht um einen Vierkant, sondern einen Vierzahn handelt.

Bei dem Mehrzahn handelt es sich insbesondere um einen genormten Innenmehrzahn, so dass dieser mit üblichen Standardwerkzeugen betätigt werden kann. Es kann sich insbesondere um einen Vierzahn, Sechszahn oder Achtzahn handeln. Bevorzugt ist aber eine möglichst geringe Anzahl der Zähne.

Bei dem Mehrrund handelt es sich insbesondere um einen genormten Innenmehrrund, so dass dieser mit üblichen Standardwerkzeugen betätigt werden kann. Es kann sich insbesondere um einen Vierrund, Fünftrund, Sechsrund oder Siebenrund handelt. Bevorzugt ist aber eine möglichst geringe Anzahl der runden Ecken.

Wenn die Werkzeugangriff-Innenkontur dem Geometrietyp Mehrkant oder Mehrzahn angehört, weist sie ebene Kraftangriffsflächen (Funktionsflächen) auf, die jeweils über relativ scharfkantige Ecken aneinander angrenzen. Wenn die Werkzeugangriff-Innenkontur hingegen dem Geometrietyp Mehrrund angehört, weist sie verrundete Kraftangriffsflächen (Funktionsflächen) auf, die jeweils über verrundete Ecken aneinander angrenzen. Das gleiche gilt für die Werkzeugangriff-Außenkontur.

Die Werkzeugangriff-Außenkontur kann dem Geometrietyp Mehrkant, Mehrzahn oder Mehrrund angehören. Bei dem Mehrkant handelt es sich insbesondere um einen genormten Außenmehrkant, so dass dieser mit üblichen Standardwerkzeugen betätigt werden kann. Es kann sich insbesondere um einen Sechskant, Achtkant, Zehnkant oder Zwölfkant handeln.

Bei dem Mehrzahn handelt es sich insbesondere um einen genormten Außenmehrzahn, so dass dieser mit üblichen Standardwerkzeugen betätigt werden kann. Es kann sich insbesondere um einen Vierzahn, Sechszahn, Achtzahn, Zehnzahn oder Zwölfzahn handeln.

Bei dem Mehrrund handelt es sich insbesondere um einen genormten Außenmehrrund, so dass dieser mit üblichen Standardwerkzeugen betätigt werden kann. Es kann sich insbesondere um einen Fünftrund, Sechsrund oder Siebenrund handelt.

Die Werkzeugangriff-Außenkontur und die Werkzeugangriff-Innenkontur können demselben Geometrietyp angehören. Sie können insbesondere beide dem Geometrietyp Kant, Zahn oder Rund angehören. Es ist aber auch möglich, dass sie unterschiedlichen Geometrietypen angehören. So sind beispielsweise die folgenden Kombinationen Außenkontur/Innenkontur möglich: Kant/Kant, Zahn/Zahn, Rund/Rund, Kant/Zahn und Zahn/Kant.

Die Kombination Außenkontur/Innenkontur kann insbesondere so ausgebildet sein, dass diese lagegleich angeordnet sind. Dies bedeutet, dass zumindest ein Teil der Außenecken und der Innenecken radial zueinander angeordnet ist.

Durch die neue hochfeste Schraube mit Doppelkonturangriff kann die Höhe des Kopfs im Vergleich zum Stand der Technik reduziert werden. Der Kopf kann insbesondere so groß sein, wie er im Stand der Technik bei einer Schraube vorliegt, die eine oder zwei Gewindedimensionen niedriger liegt. Die sich dadurch ergebende Gewichtsersparnis kann zwischen etwa 25 % und 35 %, insbesondere zwischen etwa 26 % und 31 %, liegen.

Die folgende Tabelle 1 gibt Werte des Stands der Technik gemäß dem internen Standard WA900 von FORD an:

**Tabelle 1**

| Gewindedimension | Schlüsselweite (SW) | Effektive Kopfhöhe (K') |
|---|---|---|
| M6 | 8 | 2,9 |
| M8 | 10 | 3,8 |
| M10 | 13 | 4,3 |
| M12 | 15 | 5,4 |
| M14 | 18 | 5,6 |
| M16 | 21 | 6,8 |

Die folgende Tabelle 2 gibt die entsprechenden Werte für eine erfindungsgemäße Schraube mit dem Ziel einer maximalen Gewichtsersparnis an:

**Tabelle 2**

| Gewindedimension | Schlüsselweite (SW) | Innere Sechskantnapfung (ISW) | Effektive Kopfhöhe (K') |
|---|---|---|---|
| M8 | 8 | 5 | 4,6 |
| M10 | 10 | 6 | 5,9 |
| M12 | 13 | 8 | 6,7 |
| M14 | 15 | 10 | 8,3 |
| M16 | 18 | 12 | 8,8 |
| M18 | 21 | 16 | 10,5 |

Die folgende Tabelle 3 gibt die entsprechenden Werte für eine erfindungsgemäße Schraube mit dem Ziel einer minimalen Kopfhöhe an:

**Tabelle 3**

| Gewindedimension | Schlüsselweite (SW) | Innere Sechskantnapfung (ISW) | Effektive Kopfhöhe (K') |
|---|---|---|---|
| M6 | 8 | 5 | 2,3 |
| M8 | 10 | 6 | 2,9 |
| M10 | 13 | 8 | 3,3 |
| M12 | 15 | 10 | 4,1 |
| M14 | 18 | 12 | 4,4 |
| M16 | 21 | 16 | 5,2 |

Bei dem Umformverfahren zum maschinellen spanlosen Herstellen der hochfesten Schraube handelt es sich insbesondere um ein Kaltumformverfahren. Das Verfahren wird mittels eines Umformwerkzeugs in einer Presse, insbesondere einer Mehrstufenpresse, durchgeführt.

Zum Erreichen der hohen Festigkeit der Schraube kann diese bei ihrer Herstellung einer Wärmebehandlung unterzogen werden. Bei der Wärmebehandlung kann es sich insbesondere um Bainitisieren (Zwischenstufenvergüten) zum Erzeugen eines Bainitgefüges handeln.

Bei der Umformung zum Herstellen des Gewindeabschnitts kann es sich insbesondere um Rollen oder Walzen handeln. Es kann sich insbesondere um eine Kaltumformung handeln.

Das für die Herstellung der hochfesten Schraube verwendete Ausgangsmaterial wird üblicherweise als "Draht" bezeichnet. Der für die neue hochfeste Schraube verwendete Draht kann aus kaltumformbarem unvergüteten Stahl bestehen und einen Kohlenstoffgehalt von etwa 0,2 % bis 0,6 % oder etwa 0,2 % bis 0,5 % besitzen. Der Stahl kann Legierungsanteile, insbesondere Cr, Mo, Mn, Ni, V, Nb oder Ti von insbesondere insgesamt mehr als etwa 1,1 % aufweisen.

Das Betätigungswerkzeug zum Verdrehen der Schraube mit Doppelkonturangriff dient zur Befestigung in einem Schraubwerkzeug. Das Schraubwerkzeug kann motorangetrieben oder handangetrieben ausgebildet sein. Das Betätigungswerkzeug weist ein Gehäuse auf, in dem das Außenbetätigungselement und das Innenbetätigungselement angeordnet sind.

Das Innenbetätigungselement ist mittels einer Feder translatorisch verschieblich in dem Gehäuse gelagert. Das Innenbetätigungselement ragt in seiner unbelasteten Stellung in axialer Richtung aus dem Gehäuse heraus. Es dient in dieser Weise als Einführ- und Zentrierhilfe beim Aufnehmen des Kontakts zwischen dem Betätigungswerkzeug und dem Kopf der Schraube.

Diese Funktionalität des Betätigungswerkzeugs kann beispielsweise in dem Sinne genutzt werden, dass erst beim Erreichen der gegen die Federkraft gerichteten Endposition ein Kontakt geschlossen und ein elektrisches Signal abgegeben wird, welches dazu führt, dass der Motor des Schraubwerkzeugs eingeschaltet wird. Hierdurch wird verhindert, dass eine zu einer Beschädigung des Kopfs der Schraube führende Betätigung des Betätigungswerkzeugs erfolgt, wenn noch nicht der volle Kontakt zwischen dem Außenbetätigungselement und der Werkzeugangriff-Außenkontur sowie zwischen dem Innenbetätigungselement und der Werkzeugangriff-Innenkontur der Schraube besteht.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben. Figuren 9-12 zeigen ein Betätigungswerkzeug, das nicht Teil der Erfindung ist.
- **Fig. 1A**: zeigt eine perspektivische Ansicht einer ersten beispielhaften Ausführungsform einer neuen Schraube mit Doppelkonturangriff.
- **Fig. 1B**: zeigt eine Ansicht von oben auf den Kopf der Schraube gemäß Fig. 1A.
- **Fig. 1C**: zeigt eine teilweise geschnittene Seitenansicht der Schraube gemäß Fig. 1A.
- **Fig. 1D**: zeigt das Detail A aus Fig. 1C.
- **Fig. 2A**: zeigt eine perspektivische Ansicht einer zweiten beispielhaften Ausführungsform einer neuen Schraube mit Doppelkonturangriff.
- **Fig. 2B**: zeigt eine Ansicht von oben auf den Kopf der Schraube gemäß Fig. 2A.
- **Fig. 2C**: zeigt eine teilweise geschnittene Seitenansicht der Schraube gemäß Fig. 2A.
- **Fig. 2D**: zeigt das Detail A aus Fig. 2C.
- **Fig. 3A**: zeigt eine perspektivische Ansicht einer dritten beispielhaften Ausführungsform einer neuen Schraube mit Doppelkonturangriff.
- **Fig. 3B**: zeigt eine Ansicht von oben auf den Kopf der Schraube gemäß Fig. 3A.
- **Fig. 3C**: zeigt eine teilweise geschnittene Seitenansicht der Schraube gemäß Fig. 3A.
- **Fig. 3D**: zeigt das Detail A aus Fig. 3C.
- **Fig. 4A**: zeigt eine perspektivische Ansicht einer vierten beispielhaften Ausführungsform einer neuen Schraube mit Doppelkonturangriff.
- **Fig. 4B**: zeigt eine Ansicht von oben auf den Kopf der Schraube gemäß Fig. 4A.
- **Fig. 4C**: zeigt eine teilweise geschnittene Seitenansicht der Schraube gemäß Fig. 4A.
- **Fig. 4D**: zeigt das Detail A aus Fig. 4C.
- **Fig. 5A**: zeigt eine perspektivische Ansicht einer fünften beispielhaften Ausführungsform einer neuen Schraube mit Doppelkonturangriff.
- **Fig. 5B**: zeigt eine Ansicht von oben auf den Kopf der Schraube gemäß Fig. 5A.
- **Fig. 5C**: zeigt eine teilweise geschnittene Seitenansicht der Schraube gemäß Fig. 5A.
- **Fig. 5D**: zeigt das Detail A aus Fig. 5C.
- **Fig. 6**: zeigt eine teilweise aufgebrochene und geschnittene Ansicht einer beispielhaften Ausführungsform eines neuen Umformwerkzeugs zur Herstellung einer Schraube mit Doppelkonturangriff in einer Stellung zu Beginn des Umformvorgangs.
- **Fig. 7**: zeigt das Umformwerkzeug gemäß Fig. 6 in seiner Stellung am Ende des Umformvorgangs.
- **Fig. 8**: zeigt verschiedene Umformstadien der Schraube bei deren Herstellung.
- **Fig. 9**: zeigt eine perspektivische Ansicht einer beispielhaften Ausführungsform eines Betätigungswerkzeugs zur Betätigung der Schraube mit Doppelkonturangriff.
- **Fig. 10**: zeigt eine Schnittansicht des Betätigungswerkzeugs gemäß Fig. 9 in einer ersten Stellung zu Beginn des Kontakts mit dem Kopf einer Schraube.
- **Fig. 11**: zeigt eine Schnittansicht des Betätigungswerkzeugs gemäß Fig. 9 in einer zweiten Stellung beim vollständigen Kontakt mit dem Kopf der Schraube.
- **Fig. 12**: zeigt eine perspektivische Ansicht des in Längsrichtung aufgeschnittenen Betätigungswerkzeugs gemäß Fig. 9.

### FIGURENBESCHREIBUNG

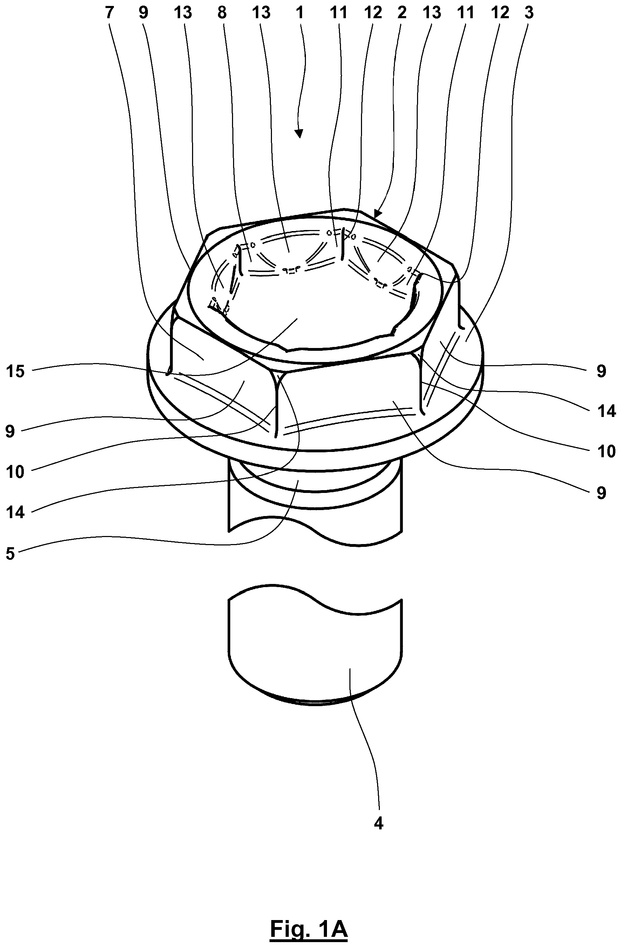

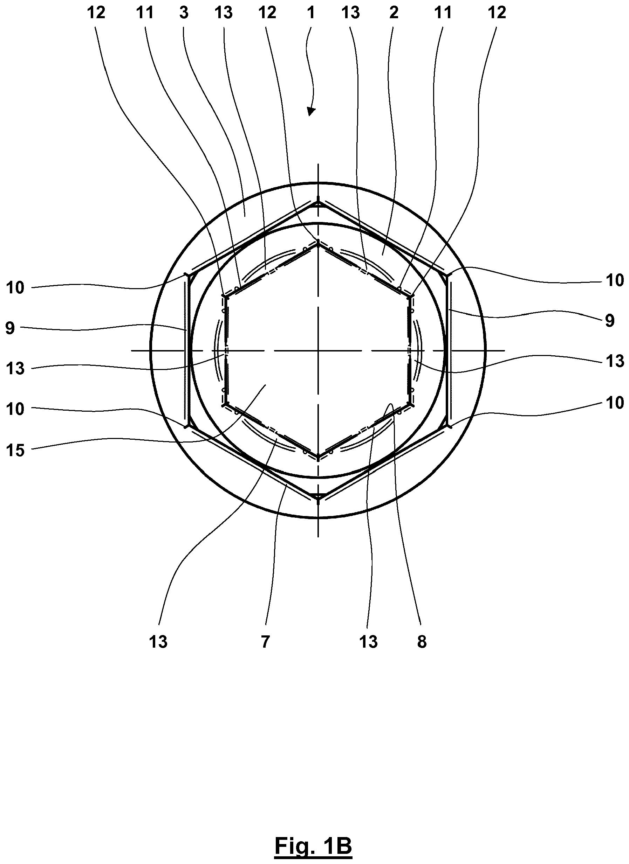

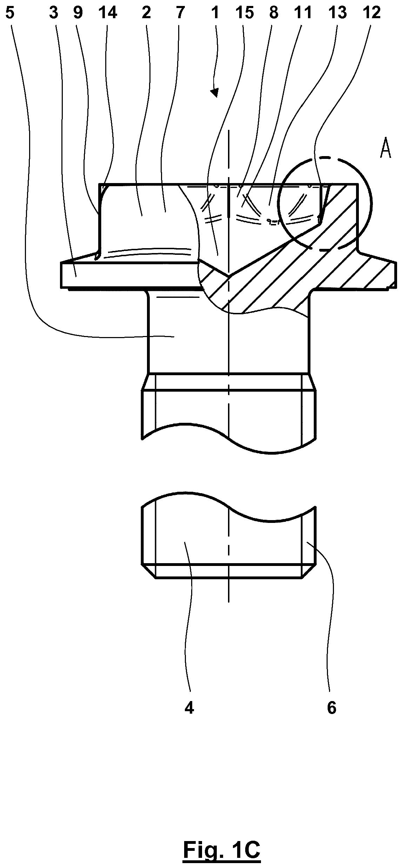

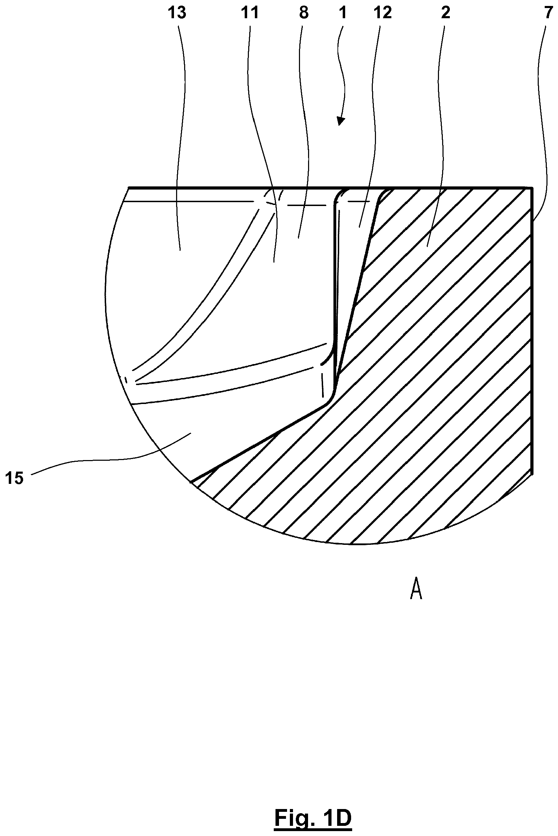

**Fig. 1A-1D** zeigen verschiedene Ansichten einer ersten beispielhaften Ausführungsform einer neuen hochfesten Schraube 1. Bei der Schraube 1 handelt es sich um eine hochfeste Schraube 1 mit einer Zugfestigkeit von mindestens 800 N/mm², insbesondere eine ultrahochfeste Schraube 1 mit einer Zugfestigkeit von mindestens 1400 N/mm². Die Schraube 1 weist ein insbesondere durch Zwischenstufenvergüten erzeugtes Bainitgefüge auf, welches sich im Wesentlichen über den gesamten Querschnitt der Schraube 1 erstreckt. Gleiches gilt für die weiteren Ausführungsformen der Schraube 1.

Die Schraube 1 weist einen Kopf 2, einen Bund 3 und einen Schaft 4 auf. An dem Schaft 4 befindet sich ein gewindefreier Schaftabschnitt 5 und ein mit einem Außengewinde versehener Gewindeabschnitt 6. Der gewindefreier Schaftabschnitt 5 könnte aber auch entfallen. Zur besseren Erkennbarkeit der Details des Kopfs 2 der Schraube 1 ist der Schaft 4 teilweise weggebrochen und somit nicht in seiner ganzen Länge dargestellt. Es versteht sich, dass der Schaft 4 eine beliebige Länge und einen beliebigen Durchmesser aufweisen kann. Gleiches gilt für die weiteren Ausführungsformen der Schraube 1.

Der Kopf 2 der Schraube 1 weist eine Werkzeugangriff-Außenkontur 7 und eine Werkzeugangriff-Innenkontur 8 auf. In dem dargestellten Beispiel ist die Werkzeugangriff-Außenkontur 7 als Außensechskant und die Werkzeugangriff-Innenkontur 8 als Innensechskant ausgebildet. Die Werkzeugangriff-Außenkontur 7 weist eine Mehrzahl - in diesem Fall sechs - Kraftangriffsflächen 9 auf, die als in etwa ebene Flächen ausgebildet sind und jeweils über Ecken 10 aneinander angrenzen. Die Werkzeugangriff-Innenkontur 8 weist ebenfalls eine Mehrzahl - in diesem Fall sechs - Kraftangriffsflächen 11 auf, die über Ecken 12 aneinander angrenzen.

Die Werkzeugangriff-Innenkontur 8 weist eine besondere Ausbildung auf, die in der Anordnung taschenförmiger Vertiefungen 13 besteht. Die taschenartigen Vertiefungen 13 sind als kaltumgeformte Dellen in der jeweiligen Kraftangriffsfläche 11 der Werkzeugangriff-Innenkontur 8 ausgebildet. Sie sind jeweils etwa mittig zwischen den Ecken 12 der Werkzeugangriff-Innenkontur 8 angeordnet. Sie schließen an das von dem Schaft 4 wegweisende axiale Ende des Kopfs 2 an. Ihre Breite nimmt in Richtung des von dem Schaft 4 wegweisenden axialen Endes des Kopfs 2 zu. Die taschenartigen Vertiefungen 13 erstrecken sich nicht über die gesamte Breite der jeweiligen Kraftangriffsfläche 11 der Werkzeugangriff-Innenkontur 8. Die Bereiche der Kraftangriffsfläche 11 der Werkzeugangriff-Innenkontur 8, in denen keine taschenartige Vertiefung 13 angeordnet ist, dienen zur Drehmomentübertragung durch das Betätigungswerkzeug zum Verdrehen der Schraube 1. Die taschenartigen Vertiefungen 13 sind in Umfangsrichtung jeweils in etwa mittig zwischen den Ecken 10 der Werkzeugangriff-Außenkontur 7 angeordnet.

Die taschenartigen Vertiefungen 13 dienen dazu, bei der Herstellung der Schraube 1 durch Umformung, insbesondere Kaltumformung, Material aus diesem inneren Bereich zu verdrängen und in den äußeren Bereich der Ecken 10 der Werkzeugangriff-Außenkontur 7 fließen zu lassen. Ziel ist es dabei, die Ecken 10 möglichst voll zu füllen, so dass die im oberen Bereich der Ecken 10 - d. h. in dem vom Schaft 4 wegweisenden axialen Ende des Kopfs 2 - die ungefüllten Eckbereiche 14 möglichst klein sind. In dieser Weise wird gewährleistet, dass das gewünschte Drehmoment sowohl über die Werkzeugangriff-Außenkontur 7 als auch die Werkzeugangriff-Innenkontur 8 übertragen werden kann. Diese Übertragung kann alternativ oder gleichzeitig erfolgen.

Die taschenförmigen Vertiefungen 13 sind von der zentralen Vertiefung 15 zu unterscheiden, die zur Bereitstellung des Materials für die gesamte Werkzeugangriff-Innenkontur 8 dient.

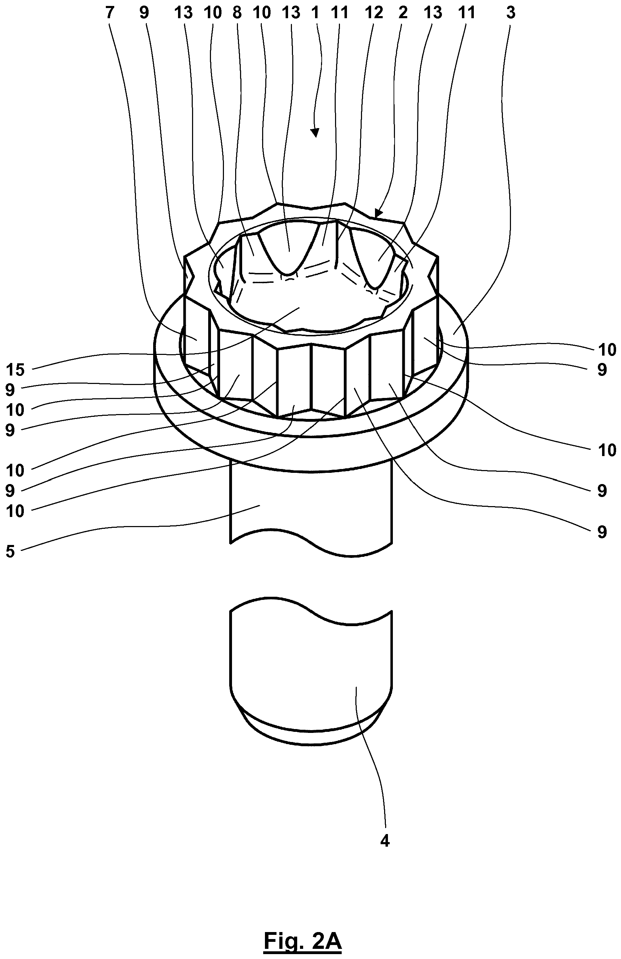

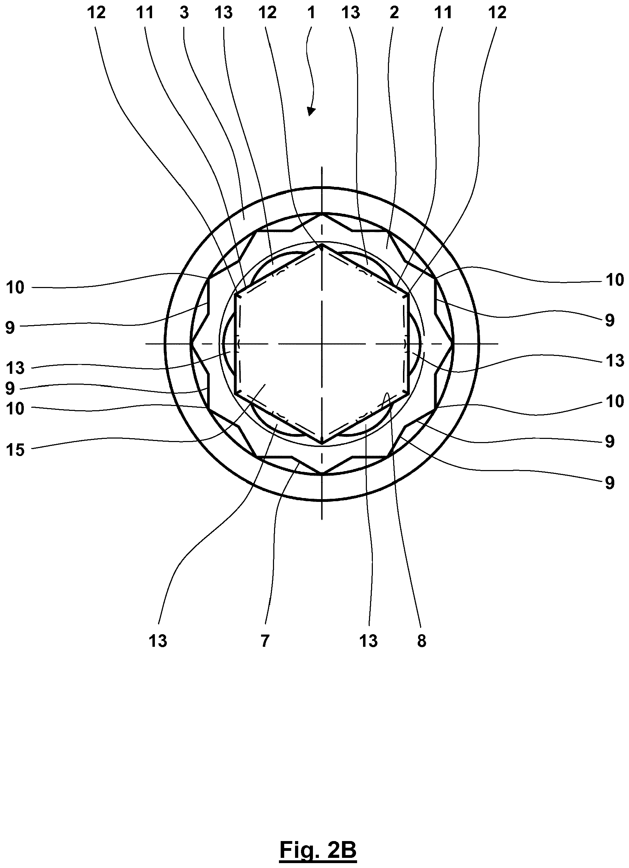

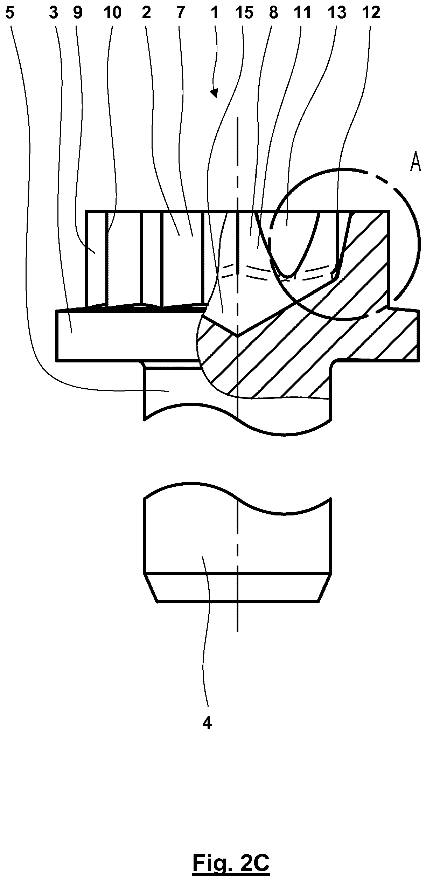

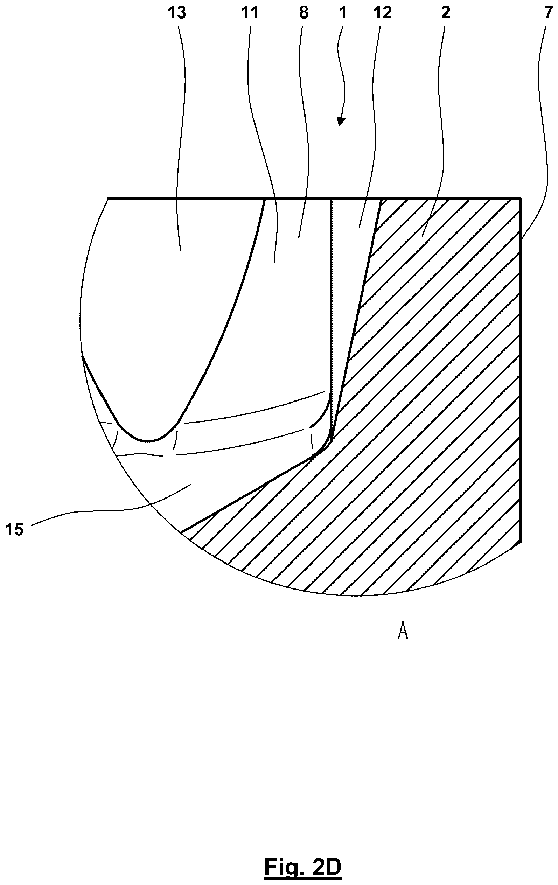

**Fig. 2A-2D** zeigen entsprechende Ansichten einer zweiten beispielhaften Ausführungsform der neuen Schraube 1. Bezüglich der übereinstimmenden Merkmale wird auf die oberhalb angegebenen Ausführungen verwiesen.

Im Unterschied dazu ist die Werkzeugangriff-Außenkontur 7 als Außenzwölfkant ausgebildet. In diesem Fall sind die taschenartigen Vertiefungen 13 nicht axial zwischen den Ecken 10 der Werkzeugangriff-Außenkontur 7 angeordnet. Stattdessen sind sie radial innenliegend zu jeder zweiten Ecke 10 der Werkzeugangriff-Außenkontur 7 angeordnet.

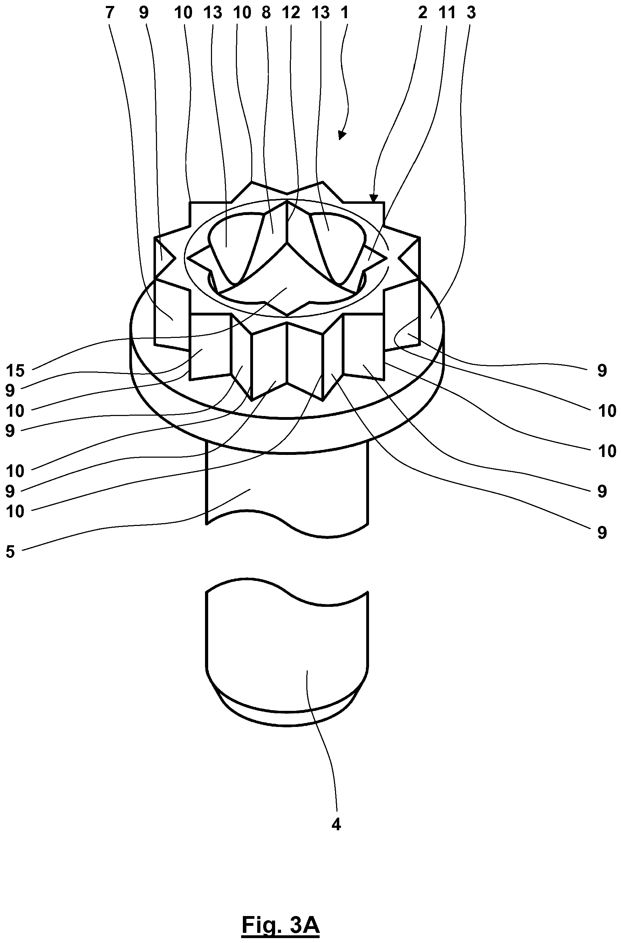

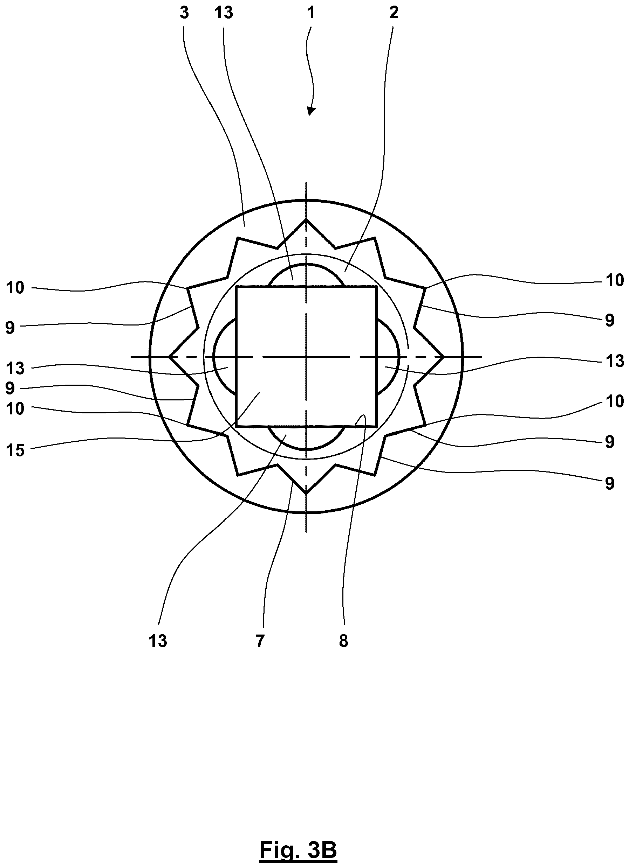

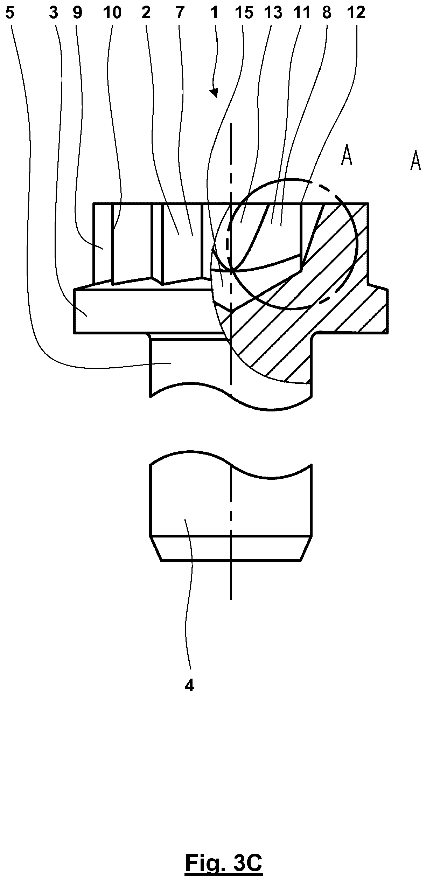

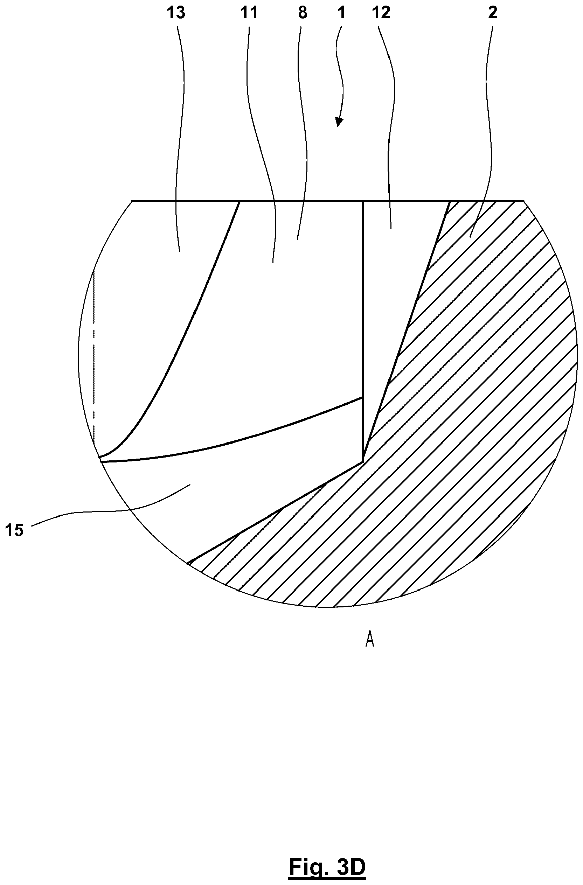

**Fig. 3A-3D** zeigen entsprechende Ansichten einer dritten beispielhaften Ausführungsform der neuen Schraube 1. Bezüglich der übereinstimmenden Merkmale wird auf die oberhalb angegebenen Ausführungen verwiesen.

Im Unterschied dazu ist die Werkzeugangriff-Außenkontur 7 als Außenzwölfzahn ausgebildet. Die Werkzeugangriff-Innenkontur 8 ist als Innenvierzahn ausgebildet. Die taschenförmigen Vertiefungen 13 sind jeweils etwa mittig zwischen den Ecken 12 der Werkzeugangriff-Innenkontur 8 angeordnet. Sie sind radial innenliegend zu jeweils einer Ecke 10 der Werkzeugangriff-Außenkontur 7 angeordnet. In diesem Fall handelt es sich um jede vierte Ecke 10.

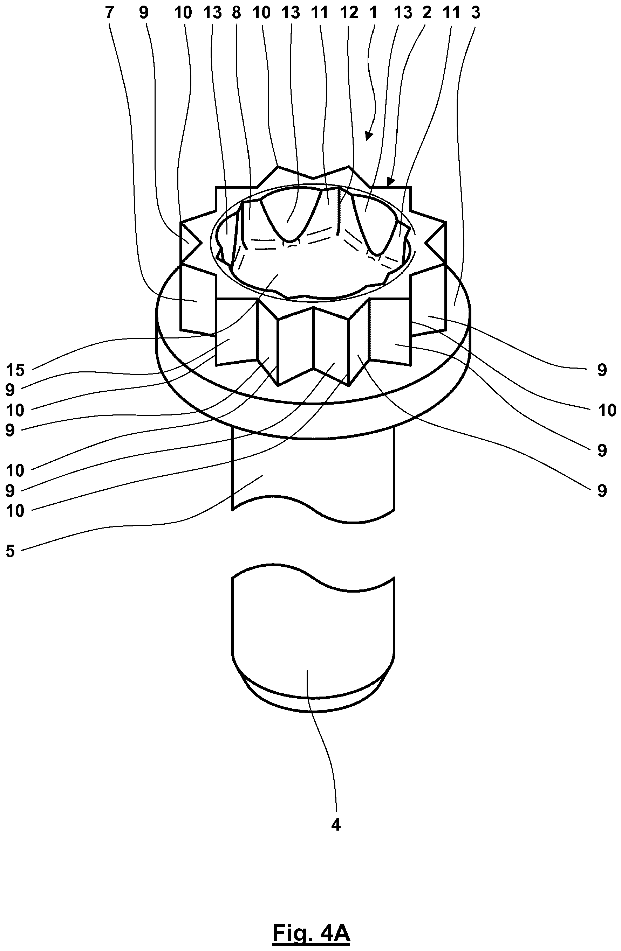

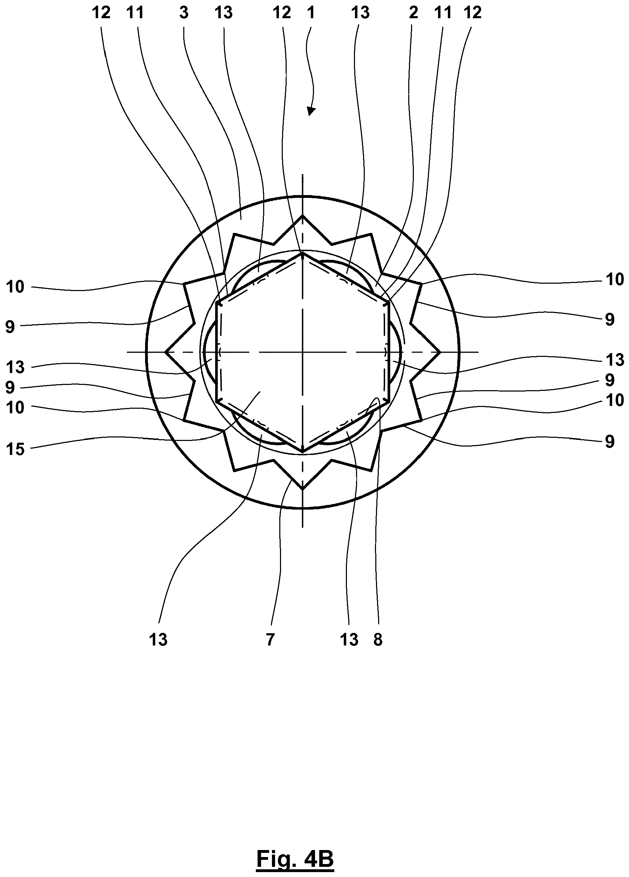

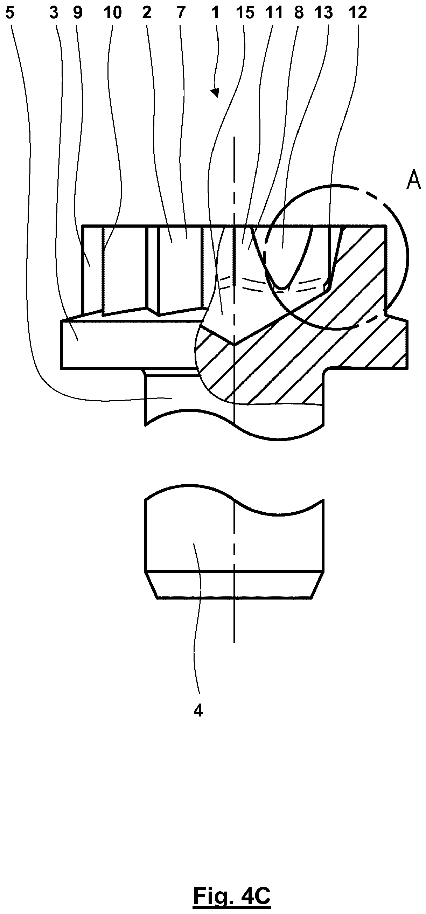

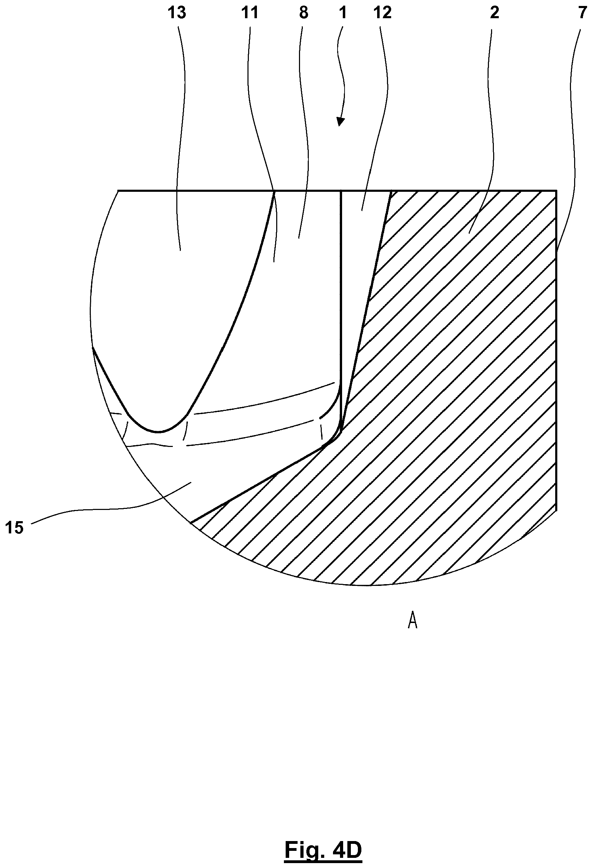

**Fig. 4A-4D** zeigen entsprechende Ansichten einer vierten beispielhaften Ausführungsform der neuen Schraube 1. Bezüglich der übereinstimmenden Merkmale wird auf die oberhalb angegebenen Ausführungen verwiesen.

Bei der Werkzeugangriff-Außenkontur 7 handelt es sich wieder um einen Außenzwölfzahn. Die Werkzeugangriff-Innenkontur 8 ist als Innensechskant ausgebildet. Die taschenförmigen Vertiefungen 13 liegen etwa mittig zwischen den Ecken 12 der Werkzeugangriff-Innenkontur 8. Sie sind radial innenliegend zu jeder zweiten Ecke 10 der Werkzeugangriff-Außenkontur 7 angeordnet.

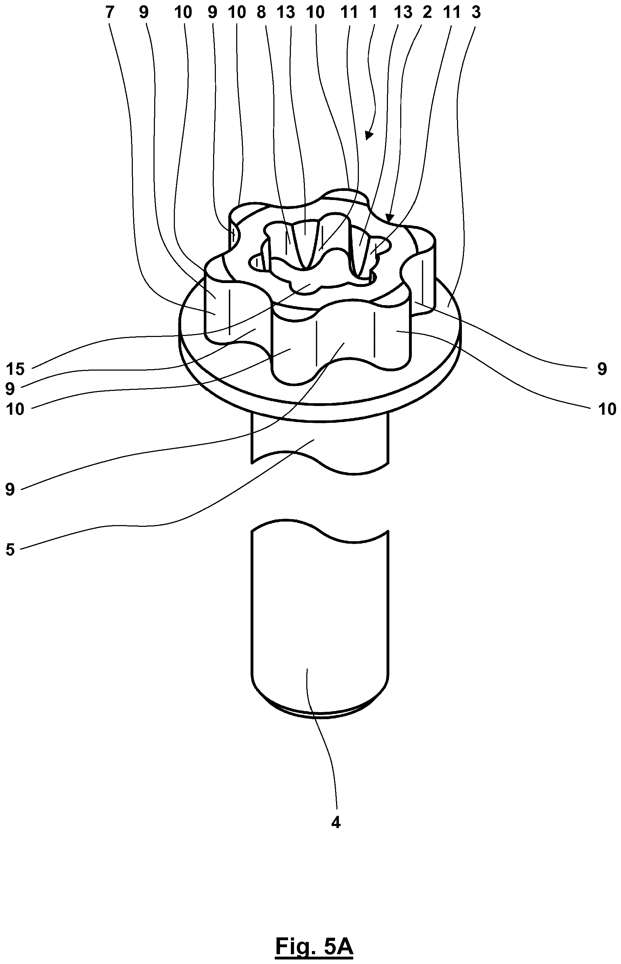

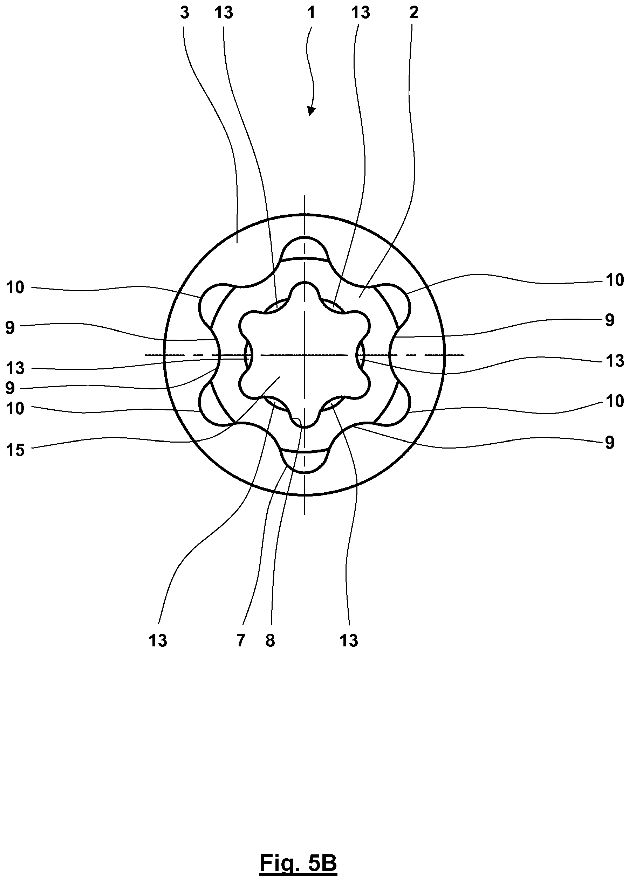

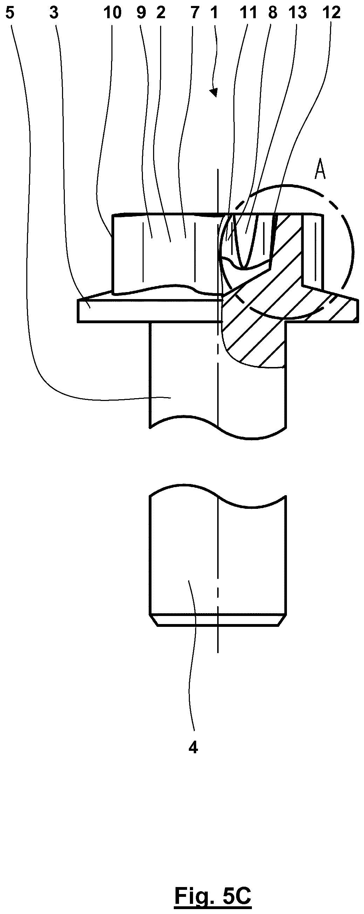

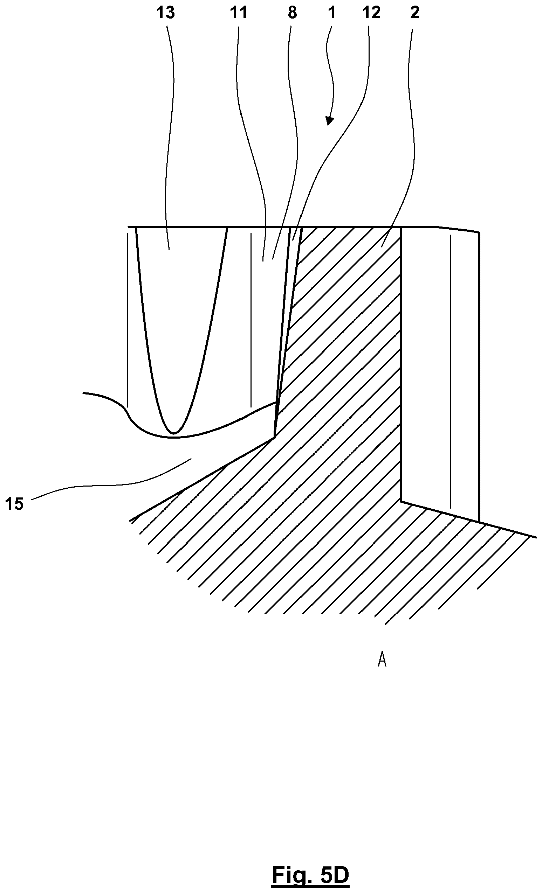

**Fig. 5A-5D** zeigen entsprechende Ansichten einer fünften beispielhaften Ausführungsform der neuen Schraube 1. Bezüglich der übereinstimmenden Merkmale wird auf die oberhalb angegebenen Ausführungen verwiesen.

Im Unterschied dazu ist die Werkzeugangriff-Außenkontur 7 als Außensechsrund ausgebildet. Die Werkzeugangriff-Innenkontur 8 ist als Innensechsrund ausgebildet. Die Kraftangriffsflächen 9, 11 sind somit nicht im Wesentlichen eben, sondern abgerundet bzw. kurvenförmig. Die Ecken 10, 12 sind nicht im Wesentlichen geradlinig, sondern abgerundet. Die taschenförmigen Vertiefungen 13 sind in Umfangsrichtung etwa mittig zwischen den runden Ecken 12 der Werkzeugangriff-Innenkontur 8 angeordnet. Sie sind auch etwa mittig zwischen den Ecken 10 der Werkzeugangriff-Außenkontur 7 angeordnet.

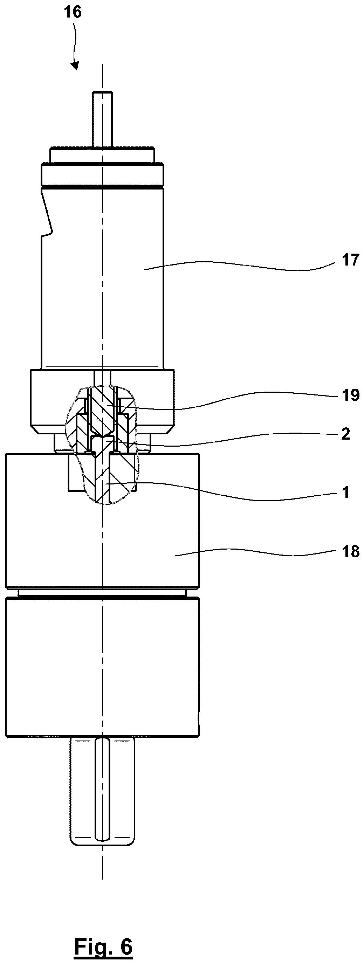

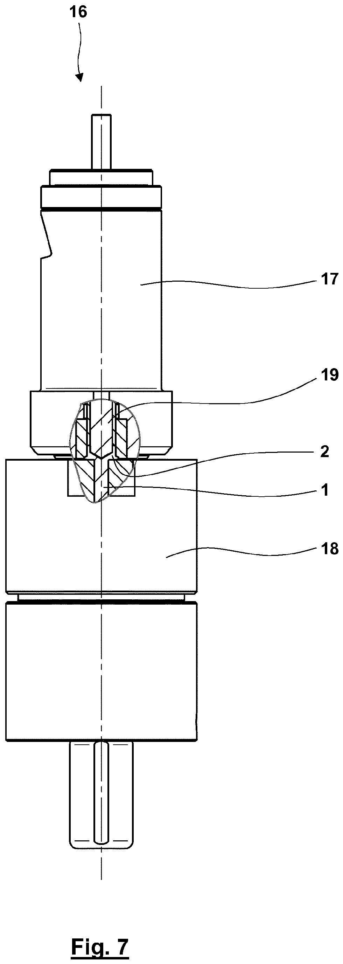

**Fig. 6** und **7** zeigen eine beispielhafte Ausführung eines neuen Umformwerkzeugs 16 zum Herstellen der neuen Schraube 1 durch Umformung, insbesondere Kaltumformung. Bei dem Umformwerkzeug 16 handelt es sich um einen Teil einer Mehrstufenpresse. Da der grundsätzliche Aufbau und die Funktionalität einer Mehrstufenpresse dem Fachmann bekannt sind, wird auf weitere diesbezügliche Ausführungen verzichtet.

Das Umformwerkzeug 16 weist ein Stempelwerkzeug 17 und ein Matrizenwerkzeug 18 auf. Das Stempelwerkzeug 17 weist einen Stempel 19 auf, der zur Erzeugung der gewünschten Geometrie des Kopfs 2 der Schraube 1 ausgebildet ist. Dabei ist der Stempel 19 so ausgebildet, dass er die zentrale Vertiefung 15 und die Werkzeugangriff-Innenkontur 8 mit den taschenartigen Vertiefungen 13 erzeugt. Das Stempelwerkzeug 17 ist so ausgebildet, dass gleichzeitig die Werkzeugangriff-Außenkontur 7 erzeugt wird. Dieser fortschreitende Vorgang ist anhand eines Vergleichs von Fig. 6 und 7 gut nachvollziehbar.

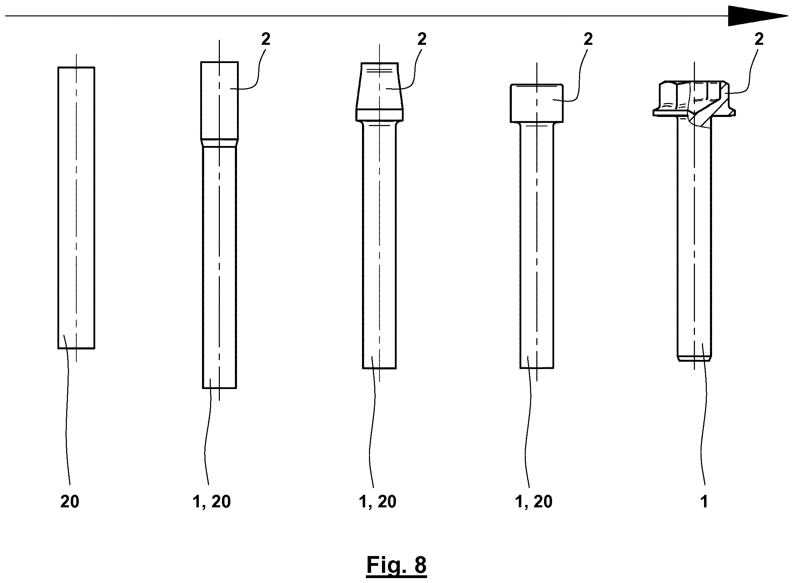

In **Fig. 8** sind verschiedene Zwischenstadien im Verlauf der Umformung eines als Drahtabschnitt ausgebildeten Rohlings 20 zu einer Schraube 1 mit einem fertig ausgebildeten Kopf 2 dargestellt.

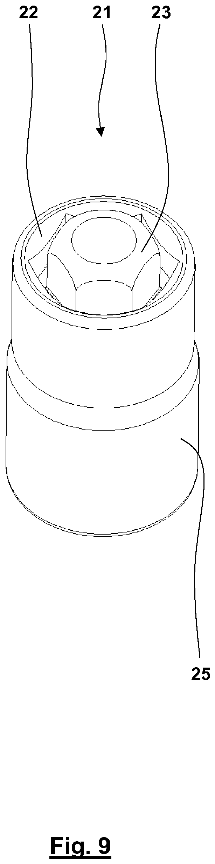

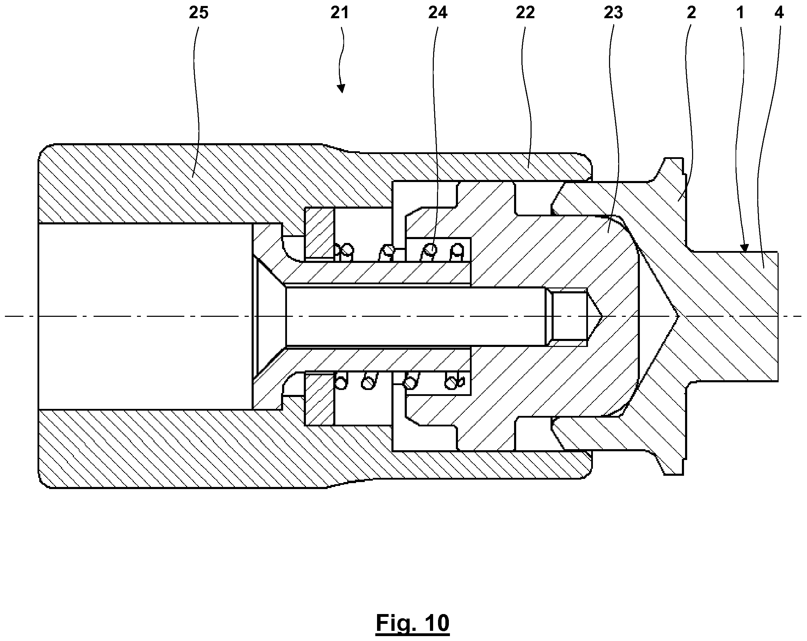

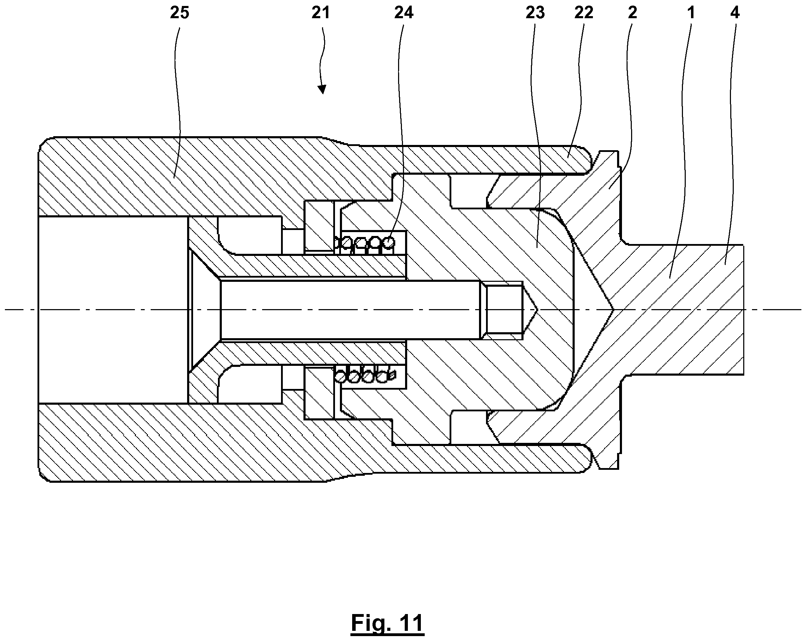

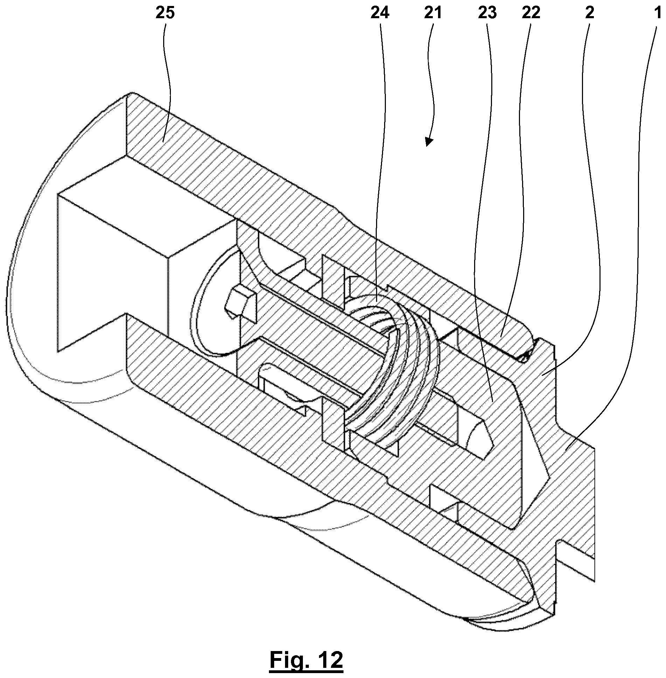

In **Fig. 9-12** sind verschiedene Ansichten einer beispielhaften Ausführungsform eines Betätigungswerkzeugs 21 zum Verdrehen der neuen Schraube 1 dargestellt. Das Betätigungswerkzeug 21 wird in einem Schraubwerkzeug befestigt. Das Schraubwerkzeug kann motorangetrieben oder handangetrieben ausgebildet sein.

Das Betätigungswerkzeug 21 weist ein Gehäuse 25 auf, in dem ein Außenbetätigungselement 22 zum Eingreifen in die Werkzeugangriff-Außenkontur 7 der Schraube 1 und ein Innenbetätigungselement 23 zum gleichzeitigen Eingreifen in die Werkzeugangriff-Innenkontur 8 der Schraube 1 angeordnet sind.

Das Innenbetätigungselement 23 ist mittels einer Feder 24 translatorisch verschieblich in dem Gehäuse 25 gelagert. Die Ausgangsstellung der Feder 24 ist in Fig. 13 dargestellt. Das Innenbetätigungselement 23 ragt in axialer Richtung aus dem Gehäuse 25 heraus. Es dient in dieser Weise als Einführ- und Zentrierhilfe beim Aufnehmen des Kontakts zwischen dem Betätigungswerkzeug 21 und dem Kopf 2 der Schraube 1. Das Innenbetätigungselement 23 wird vom Benutzer des Betätigungswerkzeugs 21 gegen die Kraft der Feder 24 gedrückt, wobei nun auch das Außenbetätigungselement 22 fortgesetzt mit der Werkzeugangriff-Außenkontur 7 der Schraube 1 in Kontakt kommt.

Diese Funktionalität des Betätigungswerkzeugs 21 kann beispielsweise in dem Sinne genutzt werden, dass erst beim Erreichen der in Fig. 14 dargestellten Endposition ein Kontakt geschlossen und ein elektrisches Signal abgegeben wird, welches dazu führt, dass der Motor des Schraubwerkzeugs eingeschaltet wird. Hierdurch wird verhindert, dass eine zu einer Beschädigung des Kopfs 2 der Schraube 1 führende Betätigung des Betätigungswerkzeugs 21 erfolgt, wenn noch nicht der volle Kontakt zwischen dem Außenbetätigungselement 22 und der Werkzeugangriff-Außenkontur 7 sowie zwischen dem Innenbetätigungselement 23 und der Werkzeugangriff-Innenkontur 8 der Schraube 1 besteht.

### BEZUGSZEICHENLISTE

- 1: Schraube
- 2: Kopf
- 3: Bund
- 4: Schaft
- 5: Schaftabschnitt
- 6: Gewindeabschnitt
- 7: Werkzeugangriff-Außenkontur
- 8: Werkzeugangriff-Innenkontur
- 9: Kraftangriffsfläche
- 10: Ecke
- 11: Kraftangriffsfläche
- 12: Ecke
- 13: taschenförmige Vertiefung
- 14: ungefüllter Eckbereich
- 15: zentrale Vertiefung
- 16: Umformwerkzeug
- 17: Stempelwerkzeug
- 18: Matrizenwerkzeug
- 19: Stempel
- 20: Rohling
- 21: Betätigungswerkzeugs
- 22: Außenbetätigungselement
- 23: Innenbetätigungselement
- 24: Feder
- 25: Gehäuse

## Patentansprüche

1. Hochfeste Schraube (1) mit einem Kopf (2) mit einer Werkzeugangriff-Außenkontur (7) und einer Werkzeugangriff-Innenkontur (8), **dadurch gekennzeichnet, dass** in der Werkzeugangriff-Innenkontur (8) taschenförmige Vertiefungen (13) angeordnet sind.

2. Schraube (1) nach Anspruch 1, **dadurch gekennzeichnet, dass**
die Werkzeugangriff-Innenkontur (8) Kraftangriffsflächen (11) aufweist, die jeweils über Ecken (12) aneinander angrenzen, und
die taschenartigen Vertiefungen (13) jeweils etwa mittig zwischen den Ecken (12) angeordnet sind.

3. Schraube (1) nach Anspruch 1 oder 2, **dadurch gekennzeichnet, dass** die Schraube (1) einen Schaft (4) aufweist und die taschenartigen Vertiefungen (13) in der Werkzeugangriff-Innenkontur (8) jeweils an das von dem Schaft (4) wegweisende axiale Ende des Kopfs (2) anschließen.

4. Schraube (1) nach Anspruch 2, **dadurch gekennzeichnet, dass** die taschenförmigen Vertiefungen (13) als kaltumgeformte Dellen in der jeweiligen Kraftangriffsfläche (11) der Werkzeugangriff-Innenkontur (8) ausgebildet sind.

5. Schraube (1) nach mindestens einem der vorhergehenden Ansprüche, **dadurch gekennzeichnet, dass** die Schraube (1) einen Schaft (4) aufweist und die Breite der taschenartigen Vertiefungen (13) in Richtung des von dem Schaft (4) wegweisenden axialen Endes des Kopfs (2) zunimmt.

6. Schraube (1) nach mindestens einem der vorhergehenden Ansprüche, **dadurch gekennzeichnet, dass** sich die taschenartigen Vertiefungen (13) nicht über die gesamte Breite der jeweiligen Kraftangriffsfläche (11) der Werkzeugangriff-Innenkontur (8) erstecken.

7. Schraube (1) nach mindestens einem der vorhergehenden Ansprüche, **dadurch gekennzeichnet, dass** die Werkzeugangriff-Innenkontur (8) dem Geometrietyp Mehrkant, Mehrzahn oder Mehrrund angehört, insbesondere Sechskant, Vierzahn oder Sechsrund.

8. Schraube (1) nach Anspruch 7, **dadurch gekennzeichnet, dass**
die Werkzeugangriff-Innenkontur (8) dem Geometrietyp Mehrkant oder Mehrzahn angehört und ebene Kraftangriffsflächen (11) aufweist, die jeweils über Ecken (12) aneinander angrenzen, und
die taschenartigen Vertiefungen (13) in der Werkzeugangriff-Innenkontur (8) jeweils in den Kraftangriffsflächen (11) etwa mittig zwischen den Ecken (12) des Mehrkants oder Mehrzahns angeordnet sind; oder
die Werkzeugangriff-Innenkontur (8) dem Geometrietyp Mehrrund angehört und verrundete Kraftangriffsflächen (11) aufweist, die jeweils über verrundete Ecken (12) aneinander angrenzen, und
die taschenartigen Vertiefungen (13) in der Werkzeugangriff-Innenkontur (8) jeweils in den Kraftangriffsflächen (11) etwa mittig zwischen den verrundeten Ecken (12) des Mehrrunds angeordnet sind.

9. Schraube (1) nach mindestens einem der vorhergehenden Ansprüche, **dadurch gekennzeichnet, dass** die Werkzeugangriff-Außenkontur (7) dem Geometrietyp Mehrkant, Mehrzahn oder Mehrrund angehört, insbesondere Sechskant, Zwölfkant, Zwölfzahn oder Sechsrund.

10. Schraube (1) nach Anspruch 9, **dadurch gekennzeichnet, dass**
die Werkzeugangriff-Außenkontur (7) dem Geometrietyp Mehrkant oder Mehrzahn angehört und ebene Kraftangriffsflächen (9) aufweist, die jeweils über Ecken (10) aneinander angrenzen, und
die taschenartigen Vertiefungen (13) in der Werkzeugangriff-Innenkontur (8) jeweils etwa mittig zwischen den Ecken (10) der Werkzeugangriff-Außenkontur (7) angeordnet sind; oder
die Werkzeugangriff-Außenkontur (7) dem Geometrietyp Mehrrund angehört und verrundete Kraftangriffsflächen (9) aufweist, die jeweils über verrundete Ecken (10) aneinander angrenzen, und
die taschenartigen Vertiefungen (13) in der Werkzeugangriff-Innenkontur (8) jeweils etwa mittig zwischen den verrundeten Ecken (10) der Werkzeugangriff-Außenkontur (7) angeordnet sind.

11. Schraube (1) nach mindestens einem der vorhergehenden Ansprüche,
**dadurch gekennzeichnet, dass** die Werkzeugangriff-Außenkontur (7) und die Werkzeugangriff-Innenkontur (8) demselben Geometrietyp angehören, insbesondere Kant, Zahn oder Rund.

12. Umformverfahren zum maschinellen Herstellen einer hochfesten Schraube (1) nach einem der Ansprüche 1 bis 11 aus einem Rohling (20), mit den Schritten:
Umformung des Rohlings (20) derart in einem Umformwerkzeug (16), dass ein Kopf (2) einer Schraube (1) mit einer Werkzeugangriff-Außenkontur (7), einer Werkzeugangriff-Innenkontur (8) und taschenförmigen Vertiefungen (13) in der Werkzeugangriff-Innenkontur (8) erzeugt wird.

13. Umformverfahren nach Anspruch 12, **dadurch gekennzeichnet, dass** der Rohling (20) so umgeformt wird, insbesondere durch Kaltumformung, dass die Schraube (1) die Merkmale mindestens eines der vorhergehenden Ansprüche erhält.

14. Umformwerkzeug (16) zum Herstellen einer hochfesten Schraube (1) nach einem der Ansprüche 1 bis 11 aus einem Rohling (20), mit einem Stempelwerkzeug (17) und einem Matrizenwerkzeug (18), **dadurch gekennzeichnet, dass** das Stempelwerkzeug (17) und das Matrizenwerkzeug (18) so ausgebildet und angeordnet sind, dass sie bei einer Betätigung des Umformwerkzeugs (16) den Rohling (20) derart umformen, dass ein Kopf (2) einer Schraube (1) mit einer Werkzeugangriff-Außenkontur (7), einer Werkzeugangriff-Innenkontur (8) und taschenförmigen Vertiefungen (13) in der Werkzeugangriff-Innenkontur (8) entsteht.

## Claims

1. High-strength screw (1) comprising a head (2), the head (2) having a tool engagement external contour (7) and a tool engagement internal contour (8), **characterized in that** pocket-shaped impressions (13) being arranged in the tool engagement internal contour (8).

2. Srew (1) according to claim 1, **characterized in that** the tool engagement internal contour (8) has force engagement surfaces (11) which are respectively adjacent to one another via corners (12), and the pocket-shaped impressions (13) are each arranged approximately centrally between the corners (12).

3. Screw (1) according to claim 1 or 2, **characterised in that** the screw (1) has a shank (4) and the pocket-shaped impressions (13) in the tool engagement internal contour (8) each adjoin the axial end of the head (2) pointing away from the shank (4).

4. Screw (1) according to claim 2, **characterized in that** the pocket-shaped impressions (13) are formed as cold-formed dents in the respective force-engaging surface (11) of the tool-engaging internal contour (8).

5. Screw (1) according to at least one of the preceding claims, **characterized in that** the screw (1) has a shank (4) and the width of the pocket-shaped impressions (13) increases in the direction of the axial end of the head (2) pointing away from the shank (4).

6. Screw (1) according to at least one of the preceding claims, **characterized in that** the pocket-shaped impressions (13) do not extend over the entire width of the respective force-applying surface (11) of the tool-applying internal contour (8).

7. Screw (1) according to at least one of the preceding claims, **characterized in that** the tool engagement internal contour (8) belongs to the geometry type polygon, multi-tooth or multi-round, in particular six-edge, four-tooth and six-round.

8. Screw (1) according to claim 7, **characterized in that**
the tool engaging internal contour (8) is of the polygonal or multi-tooth geometry type and has planar force engaging surfaces (11) which are each adjacent to each other via corners (12); and
the pocket-shaped impressions (13) in the tool engagement internal contour (8) are each arranged in the force engagement surfaces (11) approximately centrally between the corners (12) of the polygon or multi-tooth; or
the tool engagement internal contour (8) belongs to the geometry type multi-round and has rounded force engagement surfaces (11) which adjoin one another in each case via rounded corners (12), and
the pocket-shaped impressions (13) in the tool-engaging internal contour (8) are arranged in each case in the force engagement surfaces (11) approximately centrally between the rounded corners (12) of the multi-round.

9. Screw (1) according to at least one of the preceding claims, **characterized in that** the tool engagement external contour (7) belongs to the geometry type polygon, multi-tooth or multi-round, in particular six-edge, twelve-edge, twelve-tooth and six-round.

10. Screw (1) according to claim 9, **characterized in that** the tool engagement external contour (7) belongs to the geometry type polygon or multi-tooth and has planar force engagement surfaces (9) which in each case adjoin one another via corners (10), and
the pocket-shaped impressions (13) in the tool engagement internal contour (8) are each disposed approximately centrally between the corners (10) of the tool engagement external contour (7); or
the tool engagement external contour (7) belongs to the geometry type multi-round and has rounded force engagement surfaces (9) which in each case adjoin one another via rounded corners (10), and
the pocket-shaped impressions (13) in the tool-engaging internal contour (8) are each arranged approximately centrally between the rounded corners (10) of the tool-engaging external contour (7).

11. Screw (1) according to at least one of the preceding claims, **characterized in that** the tool-engaging external contour (7) and the tool-engaging internal contour (8) belong to the same geometry type, in particular edge, tooth or round.

12. Forming method for manufacture a high-strength screw (1) according to one of claims 1 to 11 from a blank (20), comprising the steps: Forming the blank (20) in a deforming tool (16) such that a head (2) of a screw (1) having a tool-engaging external contour (7), a tool-engaging internal contour (8) and pocket-shaped impressions (13) is produced in the tool-engaging internal contour (8).

13. Forming method according to claim 12, **characterized in that** the blank (20) is formed, in particular by cold forming, in such a way that the screw (1) obtains the features of at least one of the preceding claims.

14. Deforming tool (16) for manufacture a high-strength screw (1) according to one of the claims 1 to 11 from a blank (20), having a stamp tool (17) and a matrix tool (18), **characterized in that** the stamp tool (17) and the matrix tool (18) are designed and arranged in such a way, **in that**, when the forming tool (16) is actuated, they form the blank (20) in such a way that a head (2) of a screw (1) with a tool-engaging external contour (7), a tool-engaging internal contour (8) and pocket-shaped impressions (13) is produced in the tool-engaging internal contour (8).

## Revendications

1. Vis à haute résistance (1) comportant une tête (2) ayant un contour extérieur d'attaque d'outil (7) et un contour intérieur d'attaque d'outil (8), **caractérisée en ce que** des évidements (13) en forme de poche sont disposés dans le contour intérieur d'attaque d'outil (8).

2. Vis (1) selon la revendication 1,
**caractérisée en ce que**
le contour intérieur d'attaque d'outil (8) comprend des surfaces d'attaque de force (11) qui sont adjacentes les unes aux autres via des coins (12), et
les évidements (13) en forme de poche sont disposés chacun approximativement au milieu entre les coins (12).

3. Vis (1) selon la revendication 1 ou 2,
**caractérisée en ce que**
la vis (1) comprend une tige (4) et les évidements (13) en forme de poche dans le contour intérieur d'attaque d'outil (8) se raccordent chacun à l'extrémité axiale de la tête (2) détournée de la tige (4).

4. Vis (1) selon la revendication 2,
**caractérisée en ce que**
les évidements (13) en forme de poche sont réalisés sous forme de bosses formées à froid dans la surface d'attaque de force respective (11) du contour intérieur d'attaque d'outil (8).

5. Vis (1) selon l'une au moins des revendications précédentes,
**caractérisée en ce que**
la vis (1) comprend une tige (4) et la largeur des évidements (13) en forme de poche augmente dans la direction de l'extrémité axiale de la tête (2) détournée de la tige (4).

6. Vis (1) selon l'une au moins des revendications précédentes,
**caractérisée en ce que**
les évidements (13) en forme de poche ne s'étendent pas sur toute la largeur de la surface d'attaque de force respective (11) du contour intérieur d'attaque d'outil (8).

7. Vis (1) selon l'une au moins des revendications précédentes,
**caractérisée en ce que**
le contour intérieur d'attaque d'outil (8) appartient à l'un des types de géométrie suivants : polygone, multi-dents ou multi-ronds, en particulier hexagone, forme à quatre dents ou forme à six ronds.

8. Vis (1) selon la revendication 7,
**caractérisée en ce que**
le contour intérieur d'attaque d'outil (8) appartient à l'un des types de géométrie suivants : polygone ou multi-dents et présente des surfaces d'attaque de force (11) planes qui sont adjacentes les unes aux autres via des coins respectifs (12), et
les évidements (13) en forme de poche dans le contour intérieur d'attaque d'outil (8) sont disposés chacun dans les surfaces d'attaque de force (11) approximativement au milieu entre les coins (12) du polygone ou de la forme à multi-dents ; ou
le contour intérieur d'attaque d'outil (8) appartient au type de géométrie multi-ronds et présente des surfaces d'attaque de force (11) arrondies qui sont adjacentes les unes aux autres via des coins respectifs (12) arrondis, et les évidements (13) en forme de poche dans le contour intérieur d'attaque d'outil (8) sont disposés chacun dans les surfaces d'attaque de force (11) approximativement au milieu entre les coins (12) arrondis de la forme à multi-ronds.

9. Vis (1) selon l'une au moins des revendications précédentes,
**caractérisée en ce que**
le contour extérieur d'attaque d'outil (7) appartient à l'un des types de géométrie suivants : polygone, multi-dents ou multi-ronds, en particulier de forme hexagonale, de dodécaèdre, à douze dents ou à six ronds.

10. Vis (1) selon la revendication 9,
**caractérisée en ce que**
le contour extérieur d'attaque d'outil (7) appartient au type de géométrie polygone ou multi-dents et présente des surfaces d'attaque de force (9) planes qui sont adjacentes les unes aux autres via des coins respectifs (10), et
les évidements (13) en forme de poche dans le contour intérieur d'attaque d'outil (8) sont disposés chacun approximativement au milieu entre les coins (10) du contour extérieur d'attaque d'outil (7) ; ou
le contour intérieur d'attaque d'outil (7) appartient au type de géométrie multi-ronds et présente des surfaces d'attaque de force (9) arrondies qui sont adjacentes les unes aux autres via des coins respectifs (10) arrondis, et
les évidements (13) en forme de poche dans le contour intérieur d'attaque d'outil (8) sont disposés chacun approximativement au milieu entre les coins (10) arrondis du contour extérieur d'attaque d'outil (7).

11. Vis (1) selon l'une au moins des revendications précédentes, **caractérisée en ce que**
le contour extérieur d'attaque d'outil (7) et le contour intérieur d'attaque d'outil (8) appartiennent au même type de géométrie, en particulier à polygone, à dent ou à rond.

12. Procédé de formage pour la fabrication mécanique d'une vis à haute résistance (1) selon l'une des revendications 1 à 11 à partir d'une ébauche (20), comprenant les étapes consistant à :
former l'ébauche (20) dans un outil de formage (16) de manière à générer une tête (2) d'une vis (1) ayant un contour extérieur d'attaque d'outil (7), un contour intérieur d'attaque d'outil (8) et des évidements (13) en forme de poche dans le contour intérieur d'attaque d'outil (8).

13. Procédé de formage selon la revendication 12,
**caractérisé en ce que**
l'ébauche (20) est formé en particulier par formage à froid de telle sorte que la vis (1) présente les caractéristiques de l'une au moins des revendications précédentes.

14. Outil de formage (16) pour la fabrication d'une vis à haute résistance (1) selon l'une des revendications 1 à 11 à partir d'une ébauche (20), comportant un outil à poinçon (17) et un outil à matrice (18),
**caractérisé en ce que**
l'outil à poinçon (17) et l'outil à matrice (18) sont réalisés et disposés de manière à déformer l'ébauche (20) lors d'un actionnement de l'outil de formage (16), de manière à générer une tête (2) d'une vis (1) ayant un contour extérieur d'attaque d'outil (7), un contour intérieur d'attaque d'outil (8) et des évidements (13) en forme de poche dans le contour intérieur d'attaque d'outil (8).
